# EUROPEAN PATENT APPLICATION

(11) **EP 4 412 291 A1**
(43) Date of publication of application: **07.08.2024**
(21) Application number: 21958812.6
(22) Date of filing: 29.09.2021
(51) Int. Cl.: H04W 24/10, H04W 4/02

(54) **POSITION-RELATED INFORMATION REPORTING AND RECEIVING METHODS AND APPARATUSES**

(71) Applicant: Beijing Xiaomi Mobile Software Co., Ltd., Beijing 100085 (CN)
(72) Inventor: JIANG, Xiaowei, Beijing 100085 (CN)
(74) Representative: Gunzelmann, Rainer
(86) International application number: PCT/CN2021/121945
(87) International publication number: WO 2023/050225

(57) **Abstract**

The present invention relates to position-related information reporting and receiving methods and apparatuses, a communication apparatus, and a storage medium. The position-related information reporting method comprises: reducing the precision of position-related information of a terminal, and reporting the position-related information having reduced precision to a base station. According to the present invention, the terminal can determine the position-related information of the terminal, the precision of the position-related information is reduced, and then the position-related information having the reduced precision is reported to the base station, thereby facilitating avoiding privacy leakage of a terminal user caused by the fact that a network side device such as the base station obtains the position-related information having over-high precision.

## Description

### TECHNICAL FIELD

The disclosure relates to the field of communication technologies, in particular to a method for reporting location-related information, a method for receiving location-related information, an apparatus for reporting location-related information, an apparatus for receiving location-related information, a communication apparatus and a computer-readable storage medium.

### BACKGROUND

With the development of communication technologies, a cellular network can provide more and more services for a terminal. Some of these services require obtaining a location of the terminal. With the ongoing development of positioning technologies, the location of the terminal can be determined more precisely.

In some scenarios, although the cellular network needs to obtain the location of the terminal, the required precision may not be high. If, however, a highly precision reported location of the terminal is provided, the specific location of the terminal is more vulnerable to being leaked, which may affect the privacy of a user of the terminal.

### SUMMARY

In view of this, embodiments of the disclosure provide a method for reporting location-related information, a method for receiving location-related information, an apparatus for reporting location-related information, an apparatus for receiving location-related information, a communication apparatus and a computer-readable storage medium, to solve technical problems in the related art.

According to a first aspect of the embodiments of the disclosure, a method for reporting location-related information, performed by a terminal, is provided. The method includes: reducing a precision of the location-related information of the terminal; and reporting the location-related information having the precision reduced to a base station.

According to a second aspect of the embodiments of the disclosure, a method for receiving location-related information, performed by a base station, is provided. The method includes: receiving the location-related information having a precision reduced sent by a terminal.

According to a third aspect of embodiments of the disclosure, an apparatus for reporting location-related information is provided. The apparatus includes one or more processors. The one or more processors are configured to: reduce a precision of the location-related information of the terminal; and report the location-related information having the precision reduced to a base station.

According to a fourth aspect of embodiments of the disclosure, an apparatus for receiving location-related information is provided. The apparatus includes one or more processors. The one or more processors are configured to: receive the location-related information having a precision reduced sent by a terminal.

According to a fifth aspect of embodiments of the disclosure, a communication device is provided. The communication apparatus includes: a processor and a memory for storing instructions executable by the processor. The processor is configured to perform the method for reporting location-related information described above.

According to a sixth aspect of embodiments of the disclosure, a communication device is provided. The communication apparatus includes: a processor and a memory for storing instructions executable by the processor. The processor is configured to perform the method for receiving location-related information described above.

According to a seventh aspect of embodiments of the disclosure, a computer readable storage medium for storing a computer program is provided. When the computer program is executed by a processor, the steps in the method for reporting location-related information are implemented.

According to an eighth aspect of embodiments of the disclosure, a computer readable storage medium for storing a computer program is provided. When the computer programs is executed by a processor, the steps in the method for receiving location-related information are implemented.

According to the embodiments of the disclosure, the terminal can determine its own location-related information and reduce the precision of the location-related information, and then report the location-related information having the precision reduced to the base station, to avoid privacy leakage of the user of the terminal due to the acquisition of over-precise location-related information by the network side device such as the base station.

### BRIEF DESCRIPTION OF THE DRAWINGS

In order to more clearly illustrate the technical solutions in the embodiments of the disclosure, the accompanying drawings to be used in the description of the embodiments will be briefly introduced below. Obviously, the accompanying drawings described below are only some of the embodiments of the disclosure. For those skilled in the art, other accompanying drawings can be obtained based on these drawings without inventive work.
FIG. 1 is a flowchart of a method for reporting location-related information according to an embodiment of the disclosure.
FIG. 2 is a flowchart of another method for reporting location-related information according to an embodiment of the disclosure.
FIG. 3 is a flowchart of another method for reporting location-related information according to an embodiment of the disclosure.
FIG. 4 is a flowchart of another method for reporting location-related information according to an embodiment of the disclosure.
FIG. 5 is a flowchart of another method for reporting location-related information according to an embodiment of the disclosure.
FIG. 6 is a flowchart of another method for reporting location-related information according to an embodiment of the disclosure.
FIG. 7 is a flowchart of another method for reporting location-related information according to an embodiment of the disclosure.
FIG. 8 is a flowchart of another method for reporting location-related information according to an embodiment of the disclosure.
FIG. 9 is a flowchart of another method for reporting location-related information according to an embodiment of the disclosure.
FIG. 10 is a flowchart of another method for reporting location-related information according to an embodiment of the disclosure.
FIG. 11 is a flowchart of another method for reporting location-related information according to an embodiment of the disclosure.
FIG. 12 is a flowchart of a method for receiving location-related information according to an embodiment of the disclosure.
FIG. 13 is a flowchart of another method for receiving location-related information according to an embodiment of the disclosure.
FIG. 14 is a flowchart of another method for receiving location-related information according to an embodiment of the disclosure.
FIG. 15 is a flowchart of another method for receiving location-related information according to an embodiment of the disclosure.
FIG. 16 is a flowchart of another method for receiving location-related information according to an embodiment of the disclosure.
FIG. 17 is a block diagram of an apparatus for receiving location-related information according to an embodiment of the disclosure.
FIG. 18 is a block diagram of an apparatus for reporting location-related information according to an embodiment of the disclosure.

### DETAILED DESCRIPTION

The technical solutions in the embodiments of the disclosure will be clearly and completely described below with reference to the accompanying drawings in the embodiments of the disclosure. Obviously, the described embodiments are only part of the embodiments of the disclosure, and not all of the embodiments. Based on the embodiments in the disclosure, other embodiments obtained by those skilled in the art without inventive work fall within the scope of protection of this disclosure.

The terms used in the disclosure are only for the purpose of describing specific embodiments, and are not intended to limit the embodiments of the disclosure. The singular forms of "a" and "the" used in the disclosure and appended claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the embodiments of the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

For the purpose of simplicity and ease of understanding, the terms "greater than" or "less than", "higher than" or "lower than" are used herein to represent size relations. Those skilled in the art understand that the term "greater than" also covers the meaning of "greater than or equal to", and "less than" also covers the meaning of "less than or equal to". The term "higher than" covers the meaning of "higher than or equal to", and the term "lower than" covers the meaning of "lower than or equal to".

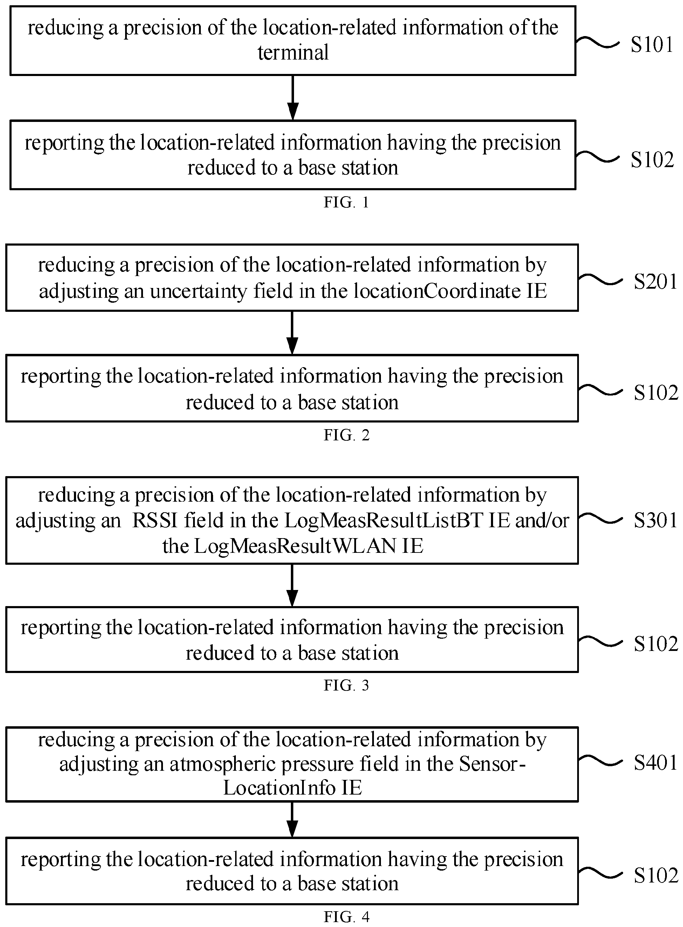

FIG. 1 is a flowchart of a method for reporting location-related information according to an embodiment of the disclosure. The method for reporting location-related information shown in the embodiment is performed by a terminal. The terminal includes but is not limited to a communication apparatus, such as a cell phone, a tablet, a wearable device, a sensor, and an Internet of Things (IoT) device. The terminal may communicate with a base station. The base station includes but is not limited to a base station in a communication system, such as a 4G base station, a 5G base station, and a 6G base station.

As illustrated in FIG. 1, the method for reporting location-related information includes, but is not limited to, the following steps.

At step S101, a precision of the location-related information of the terminal is reduced.

At step S102, the location-related information having the precision reduced is reported to a base station.

In an embodiment, the terminal and the base station may communicate over a terrestrial network or may communicate over a Non-Terrestrial Network (NTN). The technical solution of the disclosure may be applicable to a scenario in which the terminal communicates with the base station over the terrestrial network, or may be applicable to a scenario in which the terminal communicates with the base station over the NTN. The following is an exemplary description of the technical solution of the disclosure mainly for a scenario in which the terminal communicates with the base station over the NTN.

In the NTN, the terminal can communicate with the base station through a satellite. For example, the base station transmits a signal to the satellite, and the satellite transmits the signal to the terminal. There are two main operating modes of the satellite, i.e., a transparent transmission mode and a regeneration mode.

Since the satellite moves at a high altitude, its coverage is large and may even span several countries. However, the core networks of different countries may vary. For example, the Access and Mobility Management Functions (AMFs) in the core networks are different, for terminals within the coverage of the satellite, it is necessary to select an appropriate core network for the terminal to access according to a location of the terminal. For this situation, a precision requirement of the location of the terminal is generally not high, e.g., 2 kilometers is enough.

Certainly, in addition to this case, the disclosure is also applicable to other cases that do not require a high location precision, and even some embodiments that do not take in consideration a location precision requirement of the network side.

According to the embodiments of the disclosure, the terminal can determine its own location-related information and reduce the precision of the location-related information, and then report the location-related information having the precision reduced to the base station, to avoid privacy leakage of the user of the terminal due to the acquisition of over-precise location-related information by the network side device such as the base station.

In an embodiment, the location-related information includes at least one of:
location coordinate information, and Timing Advance (TA).

The TA may be an uplink TA pre-compensated by the terminal. In the NTN, it is difficult for the network side to determine the uplink TA of the terminal, and the uplink TA cannot be compensated by the network, but the terminal can pre-compensate the uplink TA by itself.

In an embodiment, a trigger event that triggers the terminal to report the location-related information includes at least one of:

TA report, Minimization of Drive-Test (MDT), Self Organization Network (SON), and an indication from the base station that instructs the terminal to report the location-related information.

The terminal can carry the location-related information in a measurement report and send it to the base station in a connected state in the case that the terminal performs the MDT. The terminal can also carry the location-related information in the measurement report and send it to the base station in the connected state through in the case that the terminal performs the SON. The terminal can send the location-related information to the base station in the case that the TA is pre-compensated. The terminal can also send the location-related information to the base station when it receives the indication from the base station and determines that the location-related information needs to be reported.

For the case that the trigger event is MDT or the case that the trigger event is SON, the base station can carry a measurement configuration in a connection reconfiguration message, carry an event trigger configuration and/or a periodic reporting configuration in a reporting configuration Information Element (IE) of the measurement configuration, and carry an indication in the event trigger configuration and/or the periodic reporting configuration, to instruct the terminal to report the location-related information. The terminal reports the location-related information based on an event configured in the event trigger configuration or based on a cycle configured in the periodic reporting configuration.

For example, the indication in the trigger configuration and/or the periodic reporting configuration may be carried in at least one of the following IEs:
include CommonLocationInfo-rlo IE;
include BT-Meas-r16 IE;
include WLAN-Meas-r16 IE; and
include Sensor-Meas-r16 IE.

In an embodiment, the method further includes: in responding to determining, based on an indication of the base station, that the location-related information having the precision not reduced needs to be reported, reporting the location-related information having the precision not reduced to the base station.

In an embodiment, in addition to reporting the location-related information after the precision is reduced to the base station, the terminal may also report the location-related information before the precision is reduced to the base station, or may report both the location-related information after the precision is reduced and the location-related information before the precision is reduced, which may be determined according to the indication of the base station. For example, if the base station indicates that the location-related information having the precision not reduced needs to be reported, the terminal reports the location-related information having the precision not reduced to the base station. The indication may be carried in the event trigger configuration or the periodic reporting configuration, to indicate that the location-related information having the precision not reduced needs to be reported.

That is, the terminal may report both the location-related information before the precision is reduced and the location-related information after the precision is reduced to the base station. In order to enable the base station to determine whether the precision of the received location-related information has been reduced, after reporting the location-related information, the terminal can also indicate whether the precision of the reported location-related information has been reduced.

The base station can determine, according to the terminal's contract information, whether reporting of the location-related information having the precision not reduced has user consent of the terminal. If the terminal agrees to report the location-related information having the precision not reduced, the base station may instruct the terminal to report the location-related information having the precision not reduced as needed. If the terminal does not agree to report the location-related information having the precision not reduced, the base station does not instruct the terminal to report the location-related information having the precision not reduced.

Regarding how to reduce the precision of the location-related information, several embodiments are used for exemplary illustration below. In an embodiment, the method for reducing the precision of the location-related information of the terminal includes at least one of:
setting a value of a preset bit in the location-related information to a specified value;
setting a value of a preset bit in the location-related information to a random value;
adding a random value to a value of a preset bit in the location-related information, or subtracting a random value from a value of a preset bit in the location-related information, or multiplying a value of a preset bit in the location-related information by a random value, or dividing a value of a preset bit in the location-related information by a random value; or
ignoring a value of a preset bit in the location-related information.

It is noted that the preset bit includes one or more bits of the location-related information, which may be consecutive or non-consecutive. The following is an exemplary description of the disclosure mainly in the case where the preset bit includes several lowest bits of the location-related information. For example, the preset bit includes two lowest bits of the location-related information.

In an embodiment, the value of the preset bit in the location-related information may be set to a specified value, e.g., 0, to realize precision reduction. For example, the location-related information is location coordinate information, which is represented by latitude and longitude, and the values of the longitude and the longitude are accurate to two digits after the decimal point, the precision of the location-related information can be reduced by setting the two digits after the decimal point to 0. For example, if the location-related information is TA, which is represented in the time unit of milliseconds, and the time is accurate to two digits after the decimal point, the precision of the location-related information can be reduced by setting the two digits after the decimal point to 0.

In an embodiment, the value of the preset bit in the location-related information may be set to a random value, to realize precision reduction. For example, the location-related information is location coordinate information, which is represented by latitude and longitude, and the values of the longitude and the longitude are accurate to two digits after the decimal point, the precision of the location-related information can be reduced by setting the two digits after the decimal point to the random value. For example, if the location-related information is TA, which is represented in the time unit of milliseconds, and the time is accurate to two digits after the decimal point, the precision of the location-related information can be reduced by setting the two digits after the decimal point to the random value.

In an embodiment, precision reduction can be realized by adding a random value to a value of a preset bit in the location-related information, or subtracting a random value from a value of a preset bit in the location-related information, or multiplying a value of a preset bit in the location-related information by a random value, or dividing a value of a preset bit in the location-related information by a random value. For example, the location-related information is location coordinate information, which is represented by latitude and longitude, and the values of the longitude and the longitude are accurate to two digits after the decimal point, the precision of the location-related information can be reduced by adding the random value to the two digits after the decimal point. For example, if the location-related information is TA, which is represented in the time unit of milliseconds, and the time is accurate to two digits after the decimal point, the precision of the location-related information can be reduced by subtracting the random value from the two digits after the decimal point.

In an embodiment, precision reduction can be realized by ignoring the value of the preset bit in the location-related information. For example, the location-related information is location coordinate information, which is represented by latitude and longitude, and the values of the longitude and the longitude are accurate to two digits after the decimal point, the precision of the location-related information can be reduced by ignoring the values of the two digits after the decimal point (i.e., retaining only integer values). For example, if the location-related information is TA, which is represented in the time unit of milliseconds, and the time is accurate to two digits after the decimal point, the precision of the location-related information can be reduced by ignoring the values of the two digits after the decimal point (i.e., retaining only integer values).

It should be noted that if the location-related information is TA, since the order of magnitude of TA is generally very small, for example, at the millisecond level, if the adjustment magnitude of the precision is large, the precision of TA may be seriously affected. Therefore, for TA, the method for reducing the precision at a small magnitude is mainly used, for example, by adding the random value to the value of the preset bit in the location-related information or subtracting the random value from the value of the preset bit in the location-related information.

In an embodiment, when the location-related information includes location coordinate information, the location-related information having the precision reduced is carried in an IE and sent to the base station, and the IE includes at least one of:
a location coordinate IE (locationCoordinate IE);
a Bluetooth log measurement result list IE (LogMeasResultListBT IE);
a wireless local network (WLAN) log measurement result list IE (LogMeasResultWLAN IE); or
a sensor location information IE (Sensor-LocationInfo IE).

FIG. 2 is a flowchart of another method for reporting location-related information according to an embodiment of the disclosure. As illustrated in FIG. 2, the IE is locationCoordinate IE, reducing the precision of the location-related information of the terminal includes the following steps.

At step S201, the precision of the location-related information is reduced by adjusting an uncertainty field in the locationCoordinate IE.

In the locationCoordinate IE, the uncertainty field may represent an elliptical range in which the location-related information is located, which is not specifically determined. The smaller the range, the higher the precision of the location-related information. The larger the range, the lower the precision of the location-related information.

Therefore, the above range can be changed by adjusting the uncertainty field, to further realize the adjustment of the precision of the location-related information.

It is also possible to set the uncertainty field to a special value agreed with the base station, so that after reporting the locationCoordinate IE, the base station can determine that the precision of the location-related information has been adjusted according to the fact that the uncertainty field includes the special value.

FIG. 3 is a flowchart of another method for reporting location-related information according to an embodiment of the disclosure. As illustrated in FIG. 3, the IE includes the LogMeasResultListBT IE and/or the LogMeasResultWLAN IE, reducing the precision of the location-related information of the terminal includes the following steps.

S301, the precision of the location-related information is reduced by adjusting a received signal strength indication (RSSI) field in the LogMeasResultListBT IE and/or the LogMeasResultWLAN IE.

In the LogMeasResultListBT IE or the LogMeasResultWLAN IE, the location-related information can be determined according to the RSSI field, and the precision of the location-related information can be reduced by adjusting the RSSI field.

The unit of the RSSI field can be decibels (dB). To adjust the RSSI field, in addition to adding the random value to the value of the preset bit in the location-related information or subtracting the random value from the value of the preset bit in the location-related information, the method of multiplying or dividing the value of the preset bit in the location-related information by the random value may also be used.

FIG. 4 is a flowchart of another method for reporting location-related information according to an embodiment of the disclosure. As illustrated in FIG. 4, when the IE includes the Sensor-LocationInfo IE, reducing the precision of the location-related information of the terminal includes the following steps.

At step S401, the precision of the location-related information is reduced by adjusting an atmospheric pressure field in the Sensor-LocationInfo IE.

In the Sensor-LocationInfo IE, the location-related information can be determined according to the atmospheric pressure field, which can be used, for example, to determine the location-related information in the direction perpendicular to the horizontal plane in the location-related information, so that the precision of the location-related information can be reduced by adjusting the atmospheric pressure field.

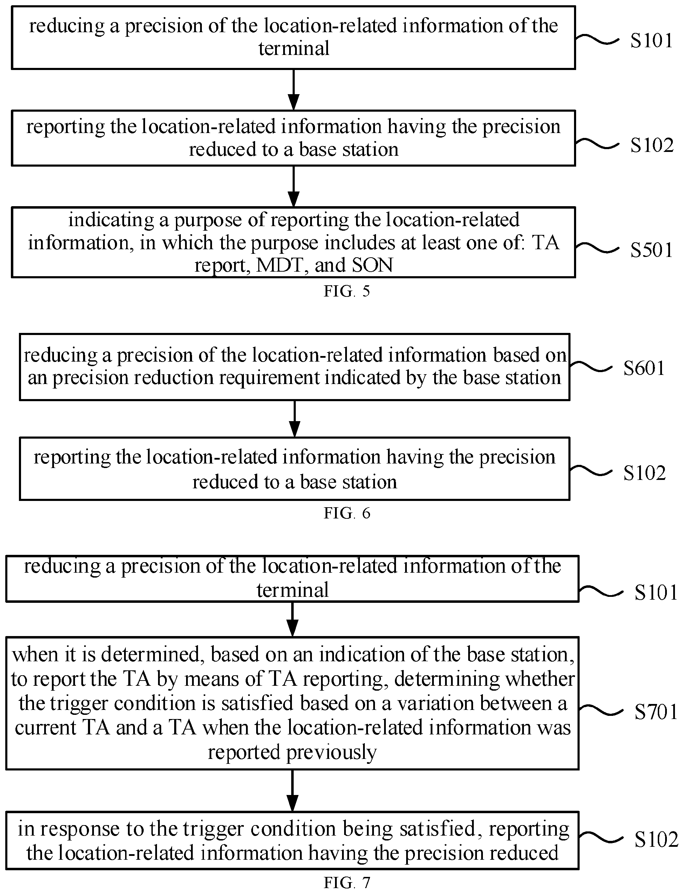

FIG. 5 is a flowchart of another method for reporting location-related information according to an embodiment of the disclosure. As illustrated in FIG. 5, the method further includes the following steps.

At step S501, a purpose of reporting the location-related information is indicated, in which the purpose includes at least one of: TA report, MDT, and SON.

In an embodiment, after reporting the location-related information having the precision reduced, the terminal may also indicate the purpose for reporting the location-related information, so that the base station can determine the purpose for reporting the location-related information of the terminal, and operate appropriately according to the location-related information having the precision reduced reported by the terminal.

FIG. 6 is a flowchart of another method for reporting location-related information according to an embodiment of the disclosure. As illustrated in FIG. 6, reducing the precision of the location-related information of the terminal includes the following steps.

S601, the precision of the location-related information is reduced based on a precision reduction requirement indicated by the base station.

In an embodiment, the base station can indicate the precision reduction requirement to the terminal, to indicate to what extent the precision needs to be reduced, for example, the precision can be reduced to 2 km. The terminal can reduce the precision of the location-related information according to the precision reduction requirement, to ensure that the reported location-related information having the precision reduced can meet the requirement of the base station.

In an embodiment, reporting the location-related information having the precision reduced to the base station, includes:
in response to a trigger condition being satisfied, reporting the location-related information having the precision reduced.

The trigger condition can be agreed by the protocol, or agreed by the base station and the terminal, or configured by the base station for the terminal. When reporting the location-related information, the terminal can determine whether the trigger condition is satisfied and report the location-related information only when the trigger condition is satisfied.

For example, in the case of configuring by the base station, the base station can carry the trigger condition in the trigger event configuration (EventTriggerConfig) of a New Radio (NR) report configuration (ReportConfigNR IE).

In an embodiment, when the location-related information includes location coordinate information, the trigger condition includes a location offset threshold; and
in response to a distance between a current location and a location at which the location-related information was reported previously being greater than the location offset threshold, it is determined that the trigger condition is satisfied.

When the terminal needs to report the location-related information having the precision reduced, the location of the terminal when reporting the location-related information previously, which can be referred as P0, and the current location of the terminal, which can be referred as P1, are determined, and a distance P01 between P0 and P1 is calculated. If P01 is greater than the offset, it is determined that the trigger condition is satisfied, and the location-related information having the precision reduced is reported.

It should be noted that the location-related information reported previously can be the previously reported location-related information having the precision not reduced. Certainly, it can be set as desired, for example, the location-related information reported previously can be set as the previously reported location-related information having the precision reduced or the previously reported location-related information having the precision not reduced.

In an embodiment, when the location-related information includes location coordinate information, the trigger condition includes a location offset threshold (i.e., offset) and a hysteresis threshold (i.e., Hysteresis); and
in response to a difference between a distance between a current location and a location at which the location-related information was reported previously and the hysteresis threshold being greater than the location offset threshold, it is determined that the trigger condition is satisfied; and in response to a sum of the distance between the current location and the location at which the location-related information was reported previously and the hysteresis threshold being less than the location offset threshold, it is determined that the trigger condition is unsatisfied; or
in response to a sum of a distance between a current location and a location at which the location-related information was reported previously and the hysteresis threshold being less than the location offset threshold, it is determined that the trigger condition is satisfied; and in response to the difference between the distance between the current location and the location at which the location-related information was reported previously and the hysteresis threshold being greater than the location offset threshold, it is determined that the trigger condition is unsatisfied.

When the terminal needs to report the location-related information having the precision reduced, the location of the terminal when reporting the location-related information previously, which can be referred as P0, and the current location of the terminal, which can be referred as P1, are determined, and a distance P01 between P0 and P1 is calculated. It is determined whether the trigger condition is satisfied based on the relationship among P01, Hysteresis and offset.

For example, through configuration, if P01 -Hysteresis > offset, it means that the trigger condition is satisfied; and
if P01+Hysteresis < offset, it means that the trigger condition is unsatisfied.

Alternatively, through configuration, if P01+Hysteresis < offset, it means that the trigger condition is satisfied; and
if P01-Hysteresis > offset, it means that the trigger condition is unsatisfied.

The terminal is triggered to report the location-related information having the precision reduced if it is determined that the trigger condition is satisfied. If it is determined that the trigger condition is unsatisfied, the terminal needs not to report the location-related information having the precision reduced, and if the location-related information having the precision reduced is currently being reported (e.g., periodically), the reporting of the location-related information having the precision reduced can be stopped.

In an embodiment, for the trigger condition, an effective time is set. When the terminal determines that the trigger condition is satisfied and the current time is within the effective time, the terminal is triggered to report the location-related information having the precision reduced, and if the current time is not within the effective time, the terminal is not triggered to report the location-related information having the precision reduced.

In an embodiment, in the case that the location-related information is TA, there are two main ways of reporting TA by the terminal. One way is TA reporting (the report content can be TA or location coordinate information), in which the TA is carried by a medium such as a Media Access Control Control Element (MAC CE) and reported. The other way is user equipment (UE) location reporting (the report content can be TA or location coordinate information), in which the TA is carried in a radio resource control (RRC) signaling and reported. The following are mainly exemplary illustrations for these two ways.

FIG. 7 is a flowchart of another method for reporting location-related information according to an embodiment of the disclosure. As illustrated in FIG. 7, when the location-related information includes a TA, the method further includes the following steps.

At step S701, when it is determined, based on an indication of the base station, to report the TA by means of TA reporting, it is determined whether the trigger condition is satisfied based on a variation between a current TA and a TA when the location-related information was reported previously.

In an embodiment, the base station may indicate the way of reporting the TA for the terminal, for example, by means of TA reporting. The terminal may determine the TA when the location-related information was reported previously, which is referred to as TA0, and a current TA, which is referred to as TA1, then calculate a variation TA01 between TAG and TA1, and determine whether the trigger condition is satisfied according to TA01.

For example, if TA01 is greater than a TA threshold, it is determined that the trigger condition is satisfied and then the reporting of the location-related information having the precision reduced is triggered. For example, if TA01 is less than the TA threshold, it is determined that the trigger condition is unsatisfied and then the reporting of the location-related information having the precision reduced is not triggered.

The location-related information reported previously can be the TA or the location coordinate information.

In an embodiment, determining whether the trigger condition is satisfied based on the variation between the current TA and the TA when the location-related information was reported previously, includes:
determining whether the trigger condition is satisfied based on the variation between the current TA and the TA when the location-related information was reported previously and a report content is the TA.

That is, the terminal can be set to determine the TA when the location-related information was reported previously, specifically, the TA when the location-related information was reported previously and the report content is TA.

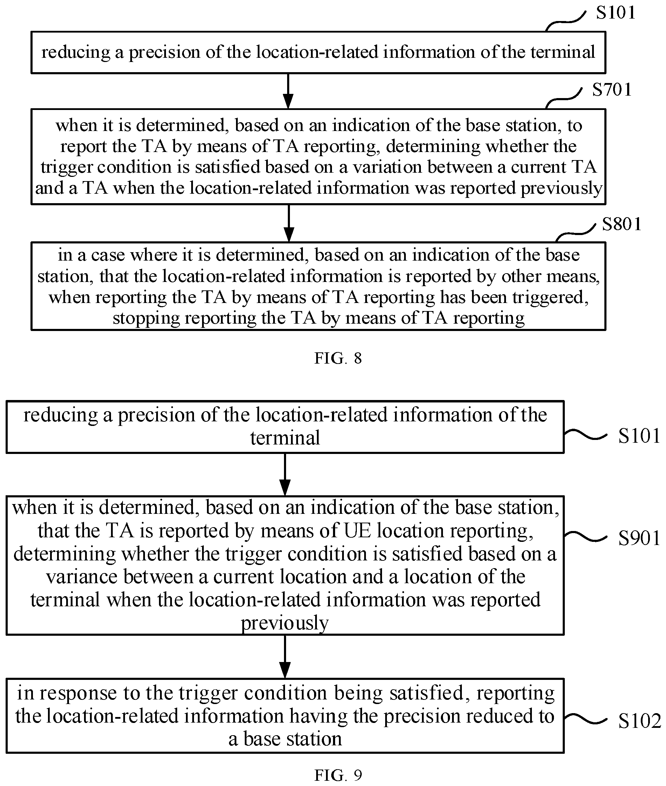

FIG. 8 is a flowchart of another method for reporting location-related information according to an embodiment of the disclosure. As illustrated in FIG. 8, reporting the location-related information having the precision reduced includes the following steps.

At step S801, in a case where it is determined, based on an indication of the base station, that the location-related information is reported by other means, when reporting the TA by means of TA reporting has been triggered, reporting the TA by means of the TA reporting is stopped.

In an embodiment, in a case that the base station instructs the terminal to report the TA by means of TA reporting, the base station may also instruct the terminal to report the location-related information by other means. For example, if the purpose of reporting the location-related information is MDT or SON, the other means refers to reporting the location-related information during the MDT or SON process.

In this case, the terminal needs to report the TA by means of TA reporting and report the location-related information by other means. However, the functions of TA and location-related information are similar for the network side, generally, there is no need to report the TA by means of TA reporting and report the location-related information by other means.

Therefore, in the embodiment, when reporting the TA by means of TA reporting has been triggered, reporting the TA by means of TA reporting can be stopped. For example, when the MAC CE carrying the TA has not yet been delivered to the lower layer, or has not yet been put in a MAC Protocol Data Unit (PDU), the reporting can be stopped. Accordingly, repeated reporting of information with similar functions can be avoided, which is conducive to saving communication resources.

FIG. 9 is a flowchart of another method for reporting location-related information according to an embodiment of the disclosure. As illustrated in FIG. 9, when the location-related information includes a TA, the method further includes the following steps.

At step S901, when it is determined, based on an indication of the base station, that the TA is reported by means of UE location reporting, it is determined whether the trigger condition is satisfied based on a variance between a current location and a location of the terminal when the location-related information was reported previously.

In an embodiment, the base station may indicate the way to report the TA for the terminal, for example, by means of TA reporting. The terminal may determine the location of the terminal when the location-related information was reported previously, which is referred to as L0, and the current location, which is referred to as L1, then calculate a variance L01 between L0 and L1, and determine whether the trigger condition is satisfied according to L01.

For example, if L01 is greater than a TA threshold, it is determined that the trigger condition is satisfied and then the reporting of the location-related information having the precision reduced is triggered. For example, if L01 is less than the TA threshold, it is determined that the trigger condition is unsatisfied, and the reporting of the location-related information having the precision reduced is not triggered.

The location-related information reported previously can be the TA or the location coordinate information.

In an embodiment, determining whether the trigger condition is satisfied based on the variance between the current location and the location of the terminal when the location-related information was reported previously, includes:
determining whether the trigger condition is satisfied based on the variance between the current location and the location of the terminal when the location-related information was reported previously and a report content is the location coordinate information.

That is, the terminal can be set to determine the location of the terminal when the location-related information was reported previously, specifically, the location of the terminal when the location-related information was reported previously and the report content is the location coordinate information.

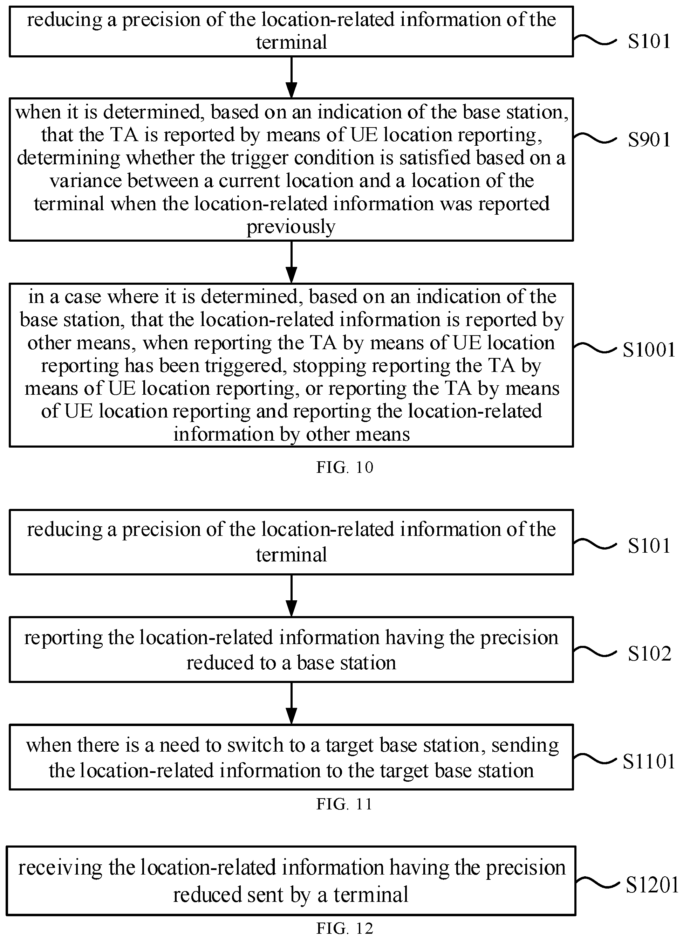

FIG. 10 is a flowchart of another method for reporting location-related information according to an embodiment of the disclosure. As illustrated in FIG. 10, reporting the location-related information having the precision reduced includes the following steps.

At step S1001, in a case where it is determined, based on an indication of the base station, that the location-related information is reported by other means, when reporting the TA by means of UE location reporting has been triggered, reporting the TA by means of UE location reporting is stopped, or the TA is reported by means of UE location reporting and the location-related information is reported by other means.

In an embodiment, in a case where the base station instructs the terminal to report the TA by means of UE location reporting, the base station may also instruct the terminal to report the location-related information by other means. For example, if the purpose of reporting the location-related information is MDT or SON, the other means refers to reporting the location-related information during the MDT or SON process.

In this case, the terminal needs to report the TA by means of UE location reporting and report the location-related information by other means. However, the functions of the TA and the location-related information are similar for the network side, generally, there is no need to report the TA by means of UE location reporting and report the location-related information by other means.

Therefore, in the embodiment, when reporting the location-related information by other means has been triggered, and reporting the TA by means of UE location reporting is also triggered, it can try to stop reporting the TA by means of UE location reporting, so that repeated reporting of information with similar functions can be avoided, which is conducive to saving communication resources.

However, since reporting the TA by means of UE location reporting is reporting the TA by carrying the TA in the RRC signaling, which may not be stopped successfully, the location-related information can be reported by other means and the TA is also reported by means of UE location reporting.

In the case where the terminal reports the location-related information by other means and reports the TA by means of UE location reporting, the location-related information reported by other means may also be the TA, so that the base station may receive two TAs, the functions of which cannot be distinguished. Therefore, in this case, the terminal may indicate the purpose of reporting the TA by means of UE location reporting and the purpose of reporting the location-related information by other means, e.g., TA report, UE location, MDT, SON, etc., so that the base station can process the two pieces of received information appropriately. Moreover, the terminal can also indicate which reported information has the precision reduced and which information has the precision not reduced.

FIG. 11 is a flowchart of another method for reporting location-related information according to an embodiment of the disclosure. As illustrated in FIG. 11, the method further includes the following steps.

At step S1101, when there is a need to switch to a target base station, the location-related information is sent to the target base station.

In an embodiment, when the terminal determines that the base station needs to be switched, the target base station to be switched may be determined and the location-related information is reported to the target base station, so that the target base station may determine the location-related information of the terminal in a timely manner.

In an embodiment, sending the location-related information to the target base station includes: sending the location-related information to the target base station during the process of switching to the target base station.

The terminal may send the location-related information to the target base station during the process of switching to the target base station, e.g., sending the location-related information to the target base station by carrying the location-related information in a connection reconfiguration complete message, so that the target base station can determine the location-related information of the terminal as early as possible.

In an embodiment, sending the location-related information to the target base station includes: in a case where it is determined, based on a reconfiguration message sent by the target base station, that the location-related information needs to be reported, during the process of switching to the target base station and/or after the process of switching to the target base station, sending the location-related information to the target base station.

The terminal can first determine whether there is a need to report the location-related information according to the reconfiguration message sent by the target base station. If it is determined that the location-related information needs to be reported, the terminal can send the location-related information to the target base station during the process of switching to the target base station, for example, carrying the location-related information in the connection reconfiguration complete message and sending it to the target base station, or can send the location-related information to the target base station after the process of switching to the target base station, for example, triggering a measurement report, carrying the location-related information in the measurement report and sending it to the target base station.

If it is determined that there is no need to report the location-related information, the location-related information may not be sent to the target base station. Therefore, unnecessary location-related information is not reported, to avoid waste of communication resources.

It should be noted that the location-related information reported to the target base station can be either location-related information having the precision reduced or location-related information having the precision not reduced, which can be set as needed.

In an embodiment, whether to obtain the location-related information and report the location-related information having the precision reduced in a case where available location-related information is not stored is determined based on at least one of:
an indication of the base station;
a trigger event that triggers reporting of the location-related information;
a purpose of reporting the location-related information;
a state of the terminal; and
a precision of the location-related information to be reduced.

In an embodiment, when the terminal needs to report the location-related information having the precision reduced, the terminal needs to store available location-related information. For example, the terminal stores the location-related information and the location-related information is effective. For example, if a time difference between an acquisition time of the stored location-related information and a current time is less than a preset duration, it is determined that the terminal stores the available location-related information.

However, in some cases, if the terminal does not store the available location-related information, the terminal may choose not to report the location-related information having the precision reduced, or may choose to obtain the location-related information and then report the location-related information after reducing the precision. In detail, it can be determined which operation of the two operations is executed according to the indication of the base station, the trigger event that triggers reporting of the location-related information, the purpose of reporting the location-related information, the state of the terminal, or the precision of the location-related information.

For example, the operation to be executed is determined according to the indication of the base station.

In the case where the base station instructs the terminal to report the location-related information, if the base station explicitly instructs the terminal to report the available location-related information, when the terminal is triggered to report the location-related information, if there is no available location-related information stored, there is no need to obtain the location-related information; if there is available location-related information stored, the available location-related information is reported.

If the base station only instructs the terminal to report the location-related information, when the terminal is triggered to report the location-related information, if there is no available location-related information stored, the location-related information is obtained and the location-related information is reported after the precision is reduced; if there is available location-related information stored, the stored available location-related information is reported after the precision is reduced.

In addition, if the base station does not instruct the terminal to report the available location-related information or the location-related information, when the terminal is triggered to report the location-related information, if there is no available location-related information stored, there is no need to obtain the location-related information; if there is available location-related information stored, the available location-related information is reported.

For example, the operation to be executed is determined according to the trigger event that triggers reporting of the location-related information.

The base station can configure the trigger event that triggers reporting of the location-related information for the terminal. When the terminal is triggered to report the location-related information, the terminal can first determine whether the trigger event is satisfied, and report the location-related information only if the trigger event is satisfied. That is, if the trigger event is unsatisfied, the terminal does not report the location-related information.

When it is determined that the trigger event is satisfied, if the terminal does not store the available location-related information, the terminal can determine whether to obtain the location-related information according to the trigger event. For example, if the base station configures that trigger even A requires the terminal to report the available location-related information and trigger event B requires the terminal to report the location-related information, when the trigger even A is satisfied, the terminal does not need to obtain the location-related information if no available location-related information is stored, and reports the available location-related information if there is available location-related information stored. When the trigger even B is satisfied, if no available location-related information is stored, the terminal obtains the location-related information and reports the obtained location-related information after the precision is reduced; if there is available location-related information stored, the terminal reports the stored available location-related information after the precision is reduced.

For example, the operation to be executed is determined according to the purpose of reporting the location-related information.

The base station can configure the purpose of reporting the location-related information for the terminal, such as TA report, SON, MDT, and LoCation Service (LCS). When the terminal is triggered to report the location-related information, if the terminal does not store the available location-related information, the terminal determines whether or not to obtain the location-related information according to the purpose.

For example, the base station configures that the purpose of TA report requires the terminal to report the available location-related information, and the purpose of MDT requires the terminal to report the location-related information. When the terminal determines that the purpose is TA report, the terminal does not need to obtain the location-related information if it does not store the available location-related information, and the terminal reports the available location-related information if it stores the available location-related information. When the terminal determines that the purpose is MDT, if the terminal does not store the available location-related information stored, the terminal can obtain the location-related information and report the location-related information after reducing the precision; if the terminal stores the available location-related information, the terminal reports the stored available location-related information after reducing the precision.

For example, the operation to be executed is determined according to the state of the terminal.

When the terminal is triggered to report the location-related information, if the terminal does not store the available location-related information, the terminal can determine whether to obtain the location-related information according to its own state.

For example, when the terminal is in an initial random access state or in a state of switching the base station, if the terminal does not store the available location-related information, the terminal can obtain the location-related information, and then report the obtained location-related information after reducing the precision; if the terminal stores the available location-related information, the terminal reports the stored available location-related information after reducing the precision.

In addition, when the terminal is in a connected state, if the trigger event that triggers reporting of the location-related information is a large difference between the current location-related information and the location-related information reported previously, for example, the difference is greater than a preset value, if the terminal does not store the available location-related information, the terminal can obtain the location-related information and then report the location-related information after reducing the precision; if the terminal stores the available location-related information, the terminal can report the stored available location-related information after reducing the precision.

When the terminal is in any other state, the terminal may not obtain the location-related information if it does not store the available location-related information, and the terminal reports the available location-related information if it stores the available location-related information.

For example, the operation to be executed is determined according to the precision of the location-related information.

The base station can indicate the precision to which the location-related information needs to be reduced to the terminal, or the terminal can determine the precision to which the location-related information needs to be reduced independently. When the terminal is triggered to report the location-related information, if the terminal does not store the available location-related information, the terminal can determine whether to obtain the location-related information according to the precision to which the location-related information needs to be reduced. In this case, the base station may not need to indicate information on whether to report the available location-related information or not to the terminal.

For example, in a case where the terminal determines that information with coarse precision needs to be reported (e.g., the precision is lower than the preset precision), if the terminal does not store the available location-related information, the terminal can obtain the location-related information, and report the obtained location-related information after reducing the precision; if the terminal stores the available location-related information, the terminal reports the stored available location-related information after reducing the precision. For example, in a case where the terminal determines that information with high precision needs to be reported (e.g., the precision is greater than the preset precision), if the terminal does not store the available location-related information, the terminal does not need to obtain the location-related information; if the terminal stores the available location-related information, the terminal reports the available location-related information.

FIG. 12 is a flowchart of another method for receiving location-related information according to an embodiment of the disclosure. The method for receiving location-related information shown in the embodiment is performed by a base station. The base station may communicate with a terminal. The terminal includes but is not limited to a communication device, such as a cell phone, a tablet, a wearable device, a sensor, and an IoT device. The base station includes but is not limited to a base station in a communication system, such as a 4G base station, a 5G base station, and a 6G base station.

As illustrated in FIG. 12, the method for receiving location-related information includes the following steps.

At step S1201, location-related information having a precision reduced sent by a terminal is received.

In an embodiment, the terminal and the base station may communicate over a terrestrial network or may communicate over an NTN. The technical solution of the disclosure may be applicable to a scenario in which the terminal communicates with the base station over the terrestrial network, or may be applicable to a scenario in which the terminal communicates with the base station over the NTN. The following is an exemplary description of the technical solution of the disclosure mainly for a scenario in which the terminal communicates with the base station over the NTN.

In the NTN, the terminal can communicate with the base station through a satellite. For example, the base station transmits a signal to the satellite, and the satellite transmits the signal to the terminal. There are two main operating modes of the satellite, i.e., a transparent transmission mode and a regeneration mode.

Since the satellite moves at a high altitude, its coverage is large and may even span several countries. However, the core networks of different countries may vary. For example, the AMFs in the core networks are different, for terminals within the coverage of the satellite, it is necessary to select an appropriate core network for the terminal to access according to a location of the terminal. For this situation, a precision requirement of the location of the terminal is generally not high, e.g., 2 kilometers is enough.

Certainly, in addition to this case, the disclosure is also applicable to other cases that do not require a high location precision, and even some embodiments that do not take in consideration a location precision requirement of the network side.

According to the embodiments of the disclosure, the terminal can determine its own location-related information and reduce the precision of the location-related information, and then report the location-related information having the precision reduced to the base station, to avoid privacy leakage of the user of the terminal due to the acquisition of over-precise location-related information by the network side device such as the base station.

In an embodiment, the location-related information includes at least one of:
location coordinate information, and TA.

The TA may be an uplink TA pre-compensated by the terminal. In the NTN, it is difficult for the network side to determine the uplink TA of the terminal, and the uplink TA cannot be compensated by the network, but the terminal can pre-compensate the uplink TA by itself.

In an embodiment, when the location-related information includes location coordinate information, the location-related information having the precision reduced is obtained from an IE, and the IE includes at least one of:
a LocationCoordinate IE;
a LogMeasResultListBT IE;
a LogMeasResultWLAN IE; or
a Sensor-LocationInfo IE.

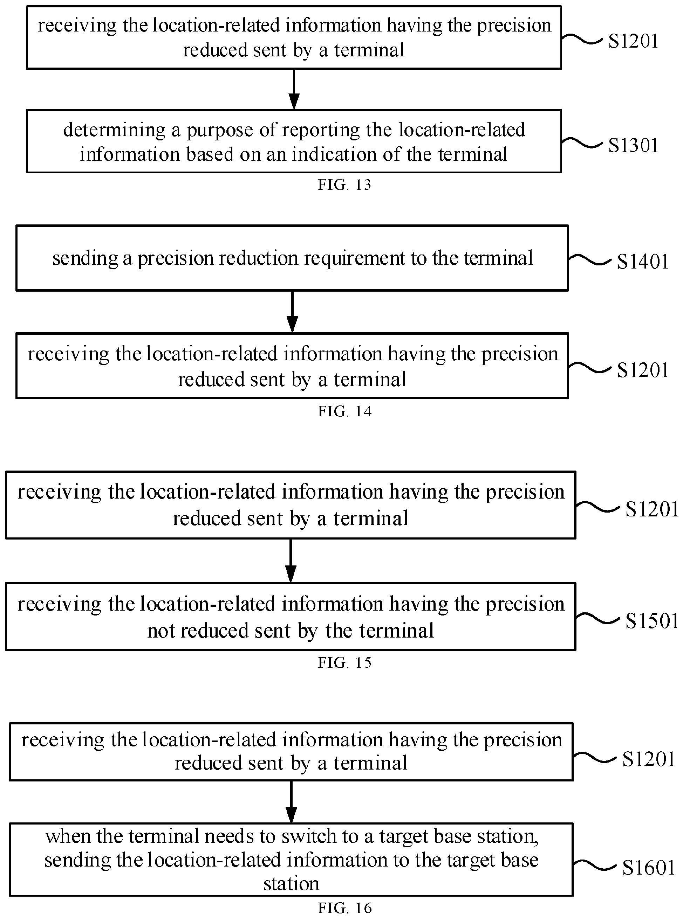

FIG. 13 is a flowchart of another method for receiving location-related information according to an embodiment of the disclosure. As illustrated in FIG. 13, the method further includes the following steps.

At step S1301, a purpose of reporting the location-related information by a terminal is determined based on an indication of the terminal, in which the purpose includes at least one of: TA report, MDT, and SON.

In an embodiment, after reporting the location-related information having the precision reduced, the terminal may also indicate the purpose of reporting the location-related information, so that the base station determines the purpose of reporting the location-related information by the terminal, and operate appropriately according to the location-related information having the precision reported by the terminal.

FIG. 14 is a flowchart of another method for receiving location-related information according to an embodiment of the disclosure. As illustrated in FIG. 14, the method further includes the following steps.

At step S1401, a precision reduction requirement is sent to the terminal.

In an embodiment, the base station may indicate the precision reduction requirement to the terminal, to indicate to what extent the precision needs to be reduced, for example, the precision can be reduced to 2 km. The terminal may reduce the precision of the location-related information according to the precision reduction requirement, to ensure that the reported location-related information having the precision reduced can satisfy the needs of the terminal.

FIG. 15 is a flowchart of another method for receiving location-related information according to an embodiment of the disclosure. As illustrated in FIG. 15, the method further includes the following steps.

At step S1501, location-related information having the precision not reduced sent by the terminal is received.

In an embodiment, the terminal may report the location-related information after the precision is reduced to the base station, or report the location-related information before the precision is reduced to the base station, or report both the location-related information after the precision is reduced and the location-related information before the precision is reduced, which can be determined according to the indication of the base station. For example, when the base station instructs the terminal to report the location-related information having the precision not reduced, the terminal reports the location-related information having the precision not reduced to the base station. The indication can be carried in an event trigger configuration or a periodic reporting configuration, to instruct the terminal to report the location-related information having the precision not reduced.

That is, the terminal can report both the location-related information before the precision is reduced and the location-related information after the precision is reduced to the base station. After reporting the location-related information, the terminal can also indicate whether the precision of the reported location-related information has been reduced, so that the base station can determine whether the precision of the reported location-related information has been reduced.

The base station can determine, according to the terminal's contract information, whether reporting of the location-related information having the precision not reduced has user consent of the terminal. If the terminal agrees to report the location-related information having the precision not reduced, the base station may instruct the terminal to report the location-related information having the precision not reduced as needed. If the terminal does not agree to report the location-related information having the precision not reduced, the base station does not instruct the terminal to report the location-related information having the precision not reduced.

FIG. 16 is a flowchart of another method for receiving location-related information according to an embodiment of the disclosure. As illustrated in FIG. 16, the method further includes the following steps.

At step S1601, when a terminal needs to switch to a target base station, location-related information is sent to a target base station.

In an embodiment, when the terminal determines that the base station needs to be switched, the terminal may determine the target base station to be switched, and then send the location-related information to the target base station, e.g., through an interface between the base stations or a core network, so that the target base station can determine the location-related information of the terminal in a timely manner. In addition, it is possible to indicate whether the precision of the location-related information sent to the target base station has been reduced or not.

Corresponding to the method for reporting location-related information and the method for receiving location-related information provided by the above embodiments, the embodiments of the disclosure also provide an apparatus for reporting location-related information and an apparatus for receiving location-related information.

The embodiments of the disclosure also provide an apparatus for reporting location-related information. The apparatus can be applied to a terminal. The terminal includes but is not limited to a communication device, such as a cell phone, a tablet, a wearable device, a sensor, and an IoT device. The terminal may communicate with a base station. The base station includes but is not limited to a base station in a communication system, such as a 4G base station, a 5G base station, and a 6G base station.

In an embodiment, the apparatus for reporting location-related information includes one or more processors. The processor is configured to: reduce a precision of the location-related information of a terminal; and report the location-related information having the precision reduced to a base station.

In an embodiment, reducing the precision of the location-related information of the terminal includes at least one of:
setting a value of a preset bit in the location-related information to a specified value;
setting a value of a preset bit in the location-related information to a random value;
adding a random value to a value of a preset bit in the location-related information, or subtracting a random value from a value of a preset bit in the location-related information, or multiplying a value of a preset bit in the location-related information by a random value, or dividing a value of a preset bit in the location-related information by a random value; or
ignoring a value of a preset bit in the location-related information.

In an embodiment, when the location-related information includes location coordinate information, the location-related information having the precision reduced is carried in an IE and sent to the base station, and the IE includes at least one of:
a locationCoordinate IE;
a LogMeasResultListBT IE;
a LogMeasResultWLAN IE; or
a Sensor-LocationInfo IE.

In an embodiment, when the IE includes the locationCoordinate IE, the processor is configured to: reduce the precision of the location-related information by adjusting an uncertainty field in the locationCoordinate IE.

In an embodiment, the IE includes the LogMeasResultListBT IE and/or the LogMeasResultWLAN IE, the processor is configured to: reduce the precision of the location-related information by adjusting an RSSI field in the LogMeasResultListBT IE and/or the LogMeasResultWLAN IE.

In an embodiment, when the IE includes the Sensor-LocationInfo IE, the processor is configured to: reduce the precision of the location-related information by adjusting an atmospheric pressure field in the Sensor-LocationInfo IE.

In an embodiment, the processor is configured to: indicate a purpose of reporting the location-related information, in which the purpose includes at least one of:
TA report, MDT, and SON.

In an embodiment, the processor is configured to: reduce the precision of the location-related information based on a precision reduction requirement indicated by the base station.

In an embodiment, the processor is further configured to: in response to determining, based on an indication of the base station, that the location-related information having the precision not reduced needs to be reported, report the location-related information having the precision not reduced to the base station.

In an embodiment, the processor is configured to: in response to a trigger condition being satisfied, reporting the location-related information having the precision reduced.

In an embodiment, when the location-related information includes location coordinate information, the trigger condition includes a location offset threshold; and in response to a distance between a current location and a location at which the location-related information was reported previously being greater than the location offset threshold, it is determined that the trigger condition is satisfied.

In an embodiment, when the location-related information includes location coordinate information, the trigger condition includes a location offset threshold and a hysteresis threshold; and in response to a difference between a distance between a current location and a location at which the location-related information was reported previously and the hysteresis threshold being greater than the location offset threshold, it is determined that the trigger condition is satisfied; and in response to a sum of the distance between the current location and the location at which the location-related information was reported previously and the hysteresis threshold being less than the location offset threshold, it is determined that the trigger condition is unsatisfied; or

in response to a sum of a distance between a current location and a location at which the location-related information was reported previously and the hysteresis threshold being less than the location offset threshold, it is determined that the trigger condition is satisfied; and in response to the difference between the distance between the current location and the location at which the location-related information was reported previously and the hysteresis threshold being greater than the location offset threshold, it is determined that the trigger condition is unsatisfied.

In an embodiment, when the location-related information includes a TA, the processor is configured to: in response to determining, based on an indication of the base station, to report the TA by means of TA reporting, determine whether the trigger condition is satisfied based on a variation between a current TA and a TA when the location-related information was reported previously y.

In an embodiment, the processor is configured to: determine whether the trigger condition is satisfied based on the variation between the current TA and the TA when the location-related information was reported previously and a report content is the TA.

In an embodiment, the processor is configured to: in a case where it is determined, based on the indication of the base station, that the location-related information is reported by other means, in response to reporting the TA by means of TA reporting being triggered, stop reporting the TA by means of TA reporting.

In an embodiment, when the location-related information includes a TA, the processor is configured to: in response to determining, based on an indication of the base station, that the TA is reported by means of user equipment (UE) location reporting, determine whether the trigger condition is satisfied based on a variance between a current location and a location of the terminal when location coordinate information was reported previously.

In an embodiment, the processor is configured to: determine whether the trigger condition is satisfied based on the variance between the current location and the location of the terminal when the location-related information was reported previously and a report content is location coordinate information.

In an embodiment, the processor is configured to: in a case where it is determined, based on the indication of the base station, that the location-related information is reported by other means, in response to reporting the TA by means of UE location reporting being triggered, stop reporting the TA by means of UE location reporting, or report the TA by means of UE location reporting and report the location-related information by other means.

In an embodiment, the processor is configured to: in response to there being a need to switch to a target base station, send the location-related information to the target base station.

In an embodiment, the processor is configured to: send the location-related information to the target base station during a process of switching to the target base station.

In an embodiment, the processor is configured to: in a case where it is determined, based on a reconfiguration message sent by the target base station, that the location-related information needs to be reported, during and/or after the process of switching to the target base station, send the location-related information to the target base station.

In an embodiment, whether to obtain the location-related information and report the location-related information having the precision reduced in a case where available location-related information is not stored is determined based on at least one of:
an indication of the base station;
a trigger event that triggers reporting the location-related information;
a purpose of reporting the location-related information;
a state of the terminal; and
a precision of the location-related information to be reduced.

The embodiments of the disclosure also provide an apparatus for receiving location-related information. The apparatus can be applied to a base station. The base station may communicate with a terminal. The terminal includes but is not limited to a communication device, such as a cell phone, a tablet, a wearable device, a sensor, and an IoT device. The base station includes but is not limited to a base station in a communication system, such as a 4G base station, a 5G base station, and a 6G base station.

In an embodiment, the apparatus for receiving location-related information includes one or more processors. The processor is configured to: receive the location-related information having a precision reduced sent by a terminal.

In an embodiment, when the location-related information includes location coordinate information, the location-related information having the precision reduced is obtained from an IE, and the IE includes at least one of:
a locationCoordinate IE;
a LogMeasResultListBT IE;
a LogMeasResultWLAN IE; or
a Sensor-LocationInfo IE.

In an embodiment, the processor is configured to: determining, based on an indication of the terminal, a purpose of reporting the location-related information, in which the purpose includes at least one of:
TA report, MDT, and SON.

In an embodiment, the processor is further configured to: send a precision reduction requirement to the terminal.

In an embodiment, the processor is further configured to: receive the location-related information having a precision not reduced sent by the terminal.

In an embodiment, the apparatus further includes: when the terminal needs to switch to a target base station, send the location-related information to the target base station.

With respect to the apparatuses in the above embodiments, the specific manner in which each module performs an operation has been described in detail in the relevant method embodiments, and will not be described in detail herein.

Since the apparatus embodiments basically correspond to the method embodiments, relevant contents can refer to partial description of the method embodiments. The apparatus embodiments described above are merely schematic, in which the modules described as separate components may or may not be physically separated, and the components shown as modules may or may not be physical modules, i.e., they may be located in a single place or may be distributed to a plurality of network modules. Some or all of these modules may be selected according to actual needs to fulfill the purpose of the solution of the embodiments, which can be understood and implemented by those skilled in the art without inventive work.

The embodiments of the disclosure also provide a communication apparatus, including a processor and a memory for storing a computer program. When the computer program is executed by the processor, the method for reporting location-related information described in any of the above embodiments is implemented.

The embodiments of the disclosure also provide a communication apparatus, including a processor and a memory for storing a computer program. When the computer program is executed by the processor, the method for receiving location-related information described in any of the above embodiments is implemented.

The embodiments of the disclosure also provide a computer-readable storage medium for storing a computer program. When the computer program is executed by a processor, the steps in the method for reporting location-related information described in any of the above embodiments are implemented.

The embodiments of the disclosure also provide a computer-readable storage medium for storing a computer program. When the computer program is executed by a processor, the steps in the method for receiving location-related information described in any of the above embodiments are implemented.

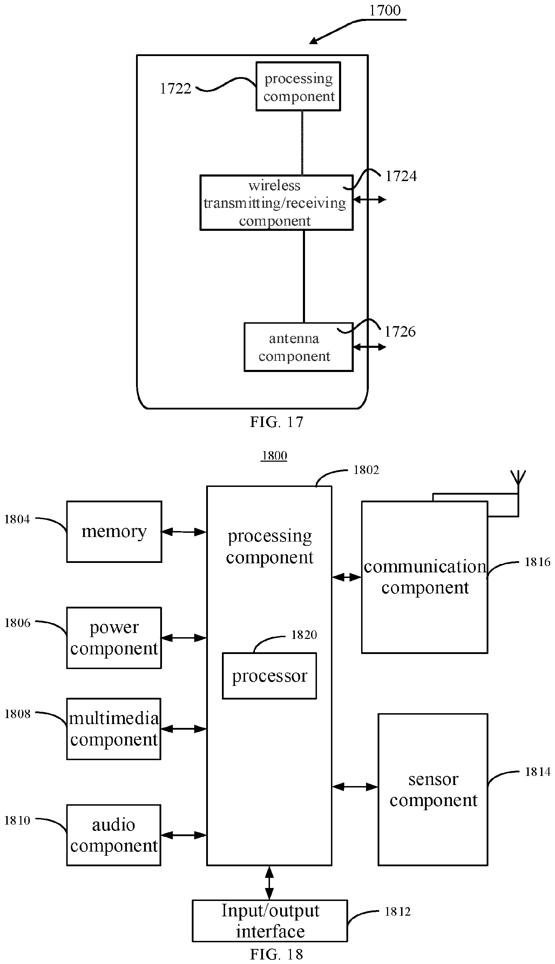

As illustrated in FIG. 17, FIG. 17 is a schematic block diagram of an apparatus 1700 for receiving location-related information according to an embodiment of the disclosure. The apparatus 1700 may be provided as a base station. As illustrated in FIG. 17, the apparatus 1700 includes a processing component 1722, a wireless transmitting/receiving component 1724, an antenna component 1726, and a signal processing portion specific to a radio interface. The processing component 1722 may further include one or more processors. One of the processors in the processing component 1722 may be configured to implement the steps in the method for receiving location-related information described in any of the above embodiments.

FIG. 18 is a schematic block diagram of an apparatus 1800 for reporting location-related information according to an embodiment of the disclosure. For example, the apparatus 1800 may be a mobile phone, a computer, a digital broadcasting terminal, a message transceiver device, a game console, a tablet device, a medical device, a fitness device and a personal digital assistant, etc.

As illustrated in FIG. 18, the apparatus 1800 may include one or more of the following components: a processing component 1802, a memory 1804, a power component 1806, a multimedia component 1808, an audio component 1810, an input/output (I/O) interface 1812, a sensor component 1814, and a communication component 1816.

The processing component 1802 typically controls overall operations of the apparatus 1800, such as the operations associated with display, telephone calls, data communications, camera operations, and recording operations. The processing component 1802 may include one or more processors 1820 to execute instructions to implement all or part of the steps in the above described method for reporting location-related information. Moreover, the processing component 1802 may include one or more modules which facilitate the interaction between the processing component 1802 and other components. For example, the processing component 1802 may include a multimedia module to facilitate the interaction between the multimedia component 1808 and the processing component 1802.

The memory 1804 is configured to store various types of data to support the operation of the apparatus 1800. Examples of such data include instructions for any applications or methods operated on the apparatus 1800, contact data, phonebook data, messages, pictures, videos, etc. The memory 1804 may be implemented using any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1806 provides power to various components of the apparatus 1800. The power component 1806 may include a power management system, one or more power sources, and any other components associated with the generation, management, and distribution of power in the apparatus 1800.

The multimedia component 1808 includes a screen providing an output interface between the apparatus 1800 and the user. In some embodiments, the screen may include a Liquid Crystal Display (LCD) and a Touch Panel (TP). If the screen includes the touch panel, the screen may be implemented as a touch screen to receive input signals from the user. The touch panel includes one or more touch sensors to sense touches, swipes, and gestures on the touch panel. The touch sensor may not only sense a boundary of a touch or swipe action, but also sense a period of time and a pressure associated with the touch or swipe action. In some embodiments, the multimedia component 1808 includes a front-facing camera and/or a rear-facing camera. When the apparatus 1800 is in an operating mode, such as a shooting mode or a video mode, the front-facing camera and/or the rear-facing camera can receive external multimedia data. Each front-facing camera and rear-facing camera may be a fixed optical lens system or has a focal length and optical zoom capability.

The audio component 1810 is configured to output and/or input audio signals. For example, the audio component 1810 includes a microphone (MIC) configured to receive an external audio signal when the apparatus 1800 is in an operation mode, such as a call mode, a recording mode, and a voice recognition mode. The received audio signal may be further stored in the memory 1804 or transmitted via the communication component 1816. In some embodiments, the audio component 1810 further includes a speaker to output audio signals.

The I/O interface 1812 provides an interface between the processing component 1802 and peripheral interface modules, such as a keyboard, a click wheel, buttons, and the like. The buttons may include, but are not limited to, a home button, a volume button, a starting button, and a locking button.

The sensor component 1814 includes one or more sensors to provide status assessments of various aspects of the apparatus 1800. For instance, the sensor component 1814 may detect an open/closed status of the apparatus 1800, relative positioning of components, e.g., the display and the keypad, of the apparatus 1800, a change in position of the apparatus 1800 or a component of the apparatus 1800, a presence or absence of user contact with the apparatus 1800, an orientation or an acceleration/deceleration of the apparatus 1800, and a change in temperature of the apparatus 1800. The sensor component 1814 may include a proximity sensor configured to detect the presence of nearby objects without any physical contact. The sensor component 1814 may also include a light sensor, such as a Complementary Metal Oxide Semiconductor (CMOS) or Charge-Coupled Device (CCD) image sensor, for use in imaging applications. In some embodiments, the sensor component 1814 may also include an accelerometer sensor, a gyroscope sensor, a magnetic sensor, a pressure sensor, or a temperature sensor.

The communication component 1816 is configured to facilitate communication, wired or wirelessly, between the apparatus 1800 and other devices. The apparatus 1800 can access a wireless network based on a communication standard, such as Wi-Fi, 2G or 3G, 4G LTE, 5G NR or a combination thereof. In an exemplary embodiment, the communication component 1816 receives a broadcast signal from an external broadcast management system or broadcast associated information via a broadcast channel. In an exemplary embodiment, the communication component 1816 further includes a Near Field Communication (NFC) module to facilitate short-range communication. For example, the NFC module may be implemented based on a RF Identification (RFID) technology, an Infrared Data Association (IrDA) technology, an Ultra-Wide Band (UWB) technology, a Blue Tooth (BT) technology, and other technologies.

In the exemplary embodiment, the apparatus 1800 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, microcontrollers, microprocessors or other electronic components, for performing the above method for reporting location-related information.

In an exemplary embodiment, there is also provided a non-transitory computer readable storage medium including instructions, such as the memory 1804. The above instructions may be executed by the processor 1820 in the apparatus 1800, for performing the above method for reporting location-related information. For example, the non-transitory computer-readable storage medium may be a ROM, a Random Access Memory (RAM), a CD-ROM, a magnetic tape, a floppy disc, and an optical data storage device.

Other embodiments of the disclosure will be apparent to those skilled in the art from consideration of the specification and practice of the disclosure disclosed here. The disclosure is intended to cover any variations, usages, or adaptations of the embodiments of the disclosure following the general principles thereof and including such departures from the disclosure as come within known or customary practice in the art. It is intended that the specification and embodiments are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

It should be noted that the relational terms herein, such as "first" and "second", are used only for differentiating one entity or operation, from another entity or operation, which, however do not necessarily require or imply that there should be any real relationship or sequence. Moreover, the terms "comprise", "include" or any other variations thereof are meant to cover non-exclusive including, so that the process, method, article or device comprising a series of elements do not only comprise those elements, but also comprise other elements that are not explicitly listed or also comprise the inherent elements of the process, method, article or device. In the case that there are no more restrictions, an element qualified by the statement "comprises a... " does not exclude the presence of additional identical elements in the process, method, article or device that comprises the said element.

The above detailed description of the methods and devices provided by the embodiments of the disclosure is provided herein, and specific examples are used herein to illustrate the principles and implementations of the disclosure, and the above illustrations of the embodiments are only used to assist in the understanding of the methods of the disclosure and the core ideas thereof. Meanwhile, for those skilled in the art, based on the ideas of the disclosure, there will be changes in the specific implementations and the usage scope, and in summary, the contents of the specification should not be construed as a limitation on the disclosure.

## Claims

1. A method for reporting location-related information, performed by a terminal, comprising:
reducing a precision of the location-related information of the terminal; and
reporting the location-related information having the precision reduced to a base station.

2. The method of claim 1, wherein reducing the precision of the location-related information of the terminal comprises at least one of:
setting a value of a preset bit in the location-related information to a specified value;
setting a value of a preset bit in the location-related information to a random value;
adding a random value to a value of a preset bit in the location-related information, or subtracting a random value from a value of a preset bit in the location-related information, or multiplying a value of a preset bit in the location-related information by a random value, or dividing a value of a preset bit in the location-related information by a random value; or
ignoring a value of a preset bit in the location-related information.

3. The method of claim 1, wherein in response to the location-related information comprising location coordinate information, the location-related information having the precision reduced is carried in an Information Element (IE) and sent to the base station, and the IE comprises at least one of:
a location coordinate IE (locationCoordinate IE);
a Bluetooth log measurement result list IE (LogMeasResultListBT IE);
a wireless local network (WLAN) log measurement result list IE (LogMeasResultWLAN IE); or
a sensor location information IE (Sensor-LocationInfo IE).

4. The method of claim 3, wherein in response to the IE comprising the locationCoordinate IE, reducing the precision of the location-related information of the terminal comprises:
reducing the precision of the location-related information by adjusting an uncertainty field in the locationCoordinate IE.

5. The method of claim 3, wherein the IE comprises the LogMeasResultListBT IE and/or the LogMeasResultWLAN IE, reducing the precision of the location-related information of the terminal comprises:
reducing the precision of the location-related information by adjusting a received signal strength indication (RSSI) field in the LogMeasResultListBT IE and/or the LogMeasResultWLAN IE.

6. The method of claim 3, wherein in response to the IE comprising the Sensor-LocationInfo IE, reducing the precision of the location-related information of the terminal comprises:
reducing the precision of the location-related information by adjusting an atmospheric pressure field in the Sensor-LocationInfo IE.

7. The method of claim 1, further comprising:
indicating a purpose of reporting the location-related information, wherein the purpose comprises at least one of:
Timing advance (TA) report, Minimization of Drive-Test (MDT), and Self Organization Network (SON).

8. The method of claim 1, wherein reducing the precision of the location-related information of the terminal comprises:
reducing the precision of the location-related information based on a precision reduction requirement indicated by the base station.

9. The method of claim 1, further comprising:
in response to determining, based on an indication of the base station, that the location-related information having the precision not reduced needs to be reported, reporting the location-related information having the precision not reduced to the base station.

10. The method of claim 1, wherein reporting the location-related information having the precision reduced to the base station, comprises:
in response to a trigger condition being satisfied, reporting the location-related information having the precision reduced.

11. The method of claim 10, wherein in response to the location-related information comprising location coordinate information, the trigger condition comprises a location offset threshold; and
in response to a distance between a current location and a location at which the location-related information was reported previously being greater than the location offset threshold, it is determined that the trigger condition is satisfied.

12. The method of claim 10, wherein in response to the location-related information comprising location coordinate information, the trigger condition comprises a location offset threshold and a hysteresis threshold; and
in response to a difference between a distance between a current location and a location at which the location-related information was reported previously and the hysteresis threshold being greater than the location offset threshold, it is determined that the trigger condition is satisfied; and in response to a sum of the distance between the current location and the location at which the location-related information was reported previously and the hysteresis threshold being less than the location offset threshold, it is determined that the trigger condition is unsatisfied; or
in response to a sum of a distance between a current location and a location at which the location-related information was reported previously and the hysteresis threshold being less than the location offset threshold, it is determined that the trigger condition is satisfied; and in response to the difference between the distance between the current location and the location at which the location-related information was reported previously and the hysteresis threshold being greater than the location offset threshold, it is determined that the trigger condition is unsatisfied.

13. The method of claim 10, wherein in response to the location-related information comprising a TA, the method further comprises:
in response to determining, based on an indication of the base station, to report the TA by means of TA reporting, determining whether the trigger condition is satisfied based on a variation between a current TA and a TA when the location-related information was reported previously.

14. The method of claim 13, wherein determining whether the trigger condition is satisfied based on the variation between the current TA and the TA when the location-related information was reported previously, comprises:
determining whether the trigger condition is satisfied based on the variation between the current TA and the TA when the location-related information was reported previously and a report content is the TA.

15. The method of claim 13, wherein reporting the location-related information having the precision reduced, comprises:
in a case where it is determined, based on the indication of the base station, that the location-related information is reported by other means, in response to reporting the TA by means of TA reporting being triggered, stopping reporting the TA by means of TA reporting.

16. The method of claim 10, wherein in response to the location-related information comprising a TA, the method further comprises:
in response to determining, based on an indication of the base station, that the TA is reported by means of user equipment (UE) location reporting, determining whether the trigger condition is satisfied based on a variance between a current location and a location of the terminal when location coordinate information was reported previously.

17. The method of claim 16, wherein determining whether the trigger condition is satisfied based on the variance between the current location and the location of the terminal when the location-related information was reported previously, comprises:
determining whether the trigger condition is satisfied based on the variance between the current location and the location of the terminal when the location-related information was reported previously and a report content is location coordinate information.

18. The method of claim 16, wherein reporting the location-related information having the precision reduced, comprises:
in a case where it is determined, based on the indication of the base station, that the location-related information is reported by other means, in response to reporting the TA by means of UE location reporting being triggered, stopping reporting the TA by means of UE location reporting, or reporting the TA by means of UE location reporting and reporting the location-related information by other means.

19. The method of any one of claims 1-18, further comprising:
in response to there being a need to switch to a target base station, sending the location-related information to the target base station.

20. The method of claim 19, wherein sending the location-related information to the target base station, comprises:
sending the location-related information to the target base station during a process of switching to the target base station.

21. The method of claim 20, wherein sending the location-related information to the target base station, comprises:
in a case where it is determined, based on a reconfiguration message sent by the target base station, that the location-related information needs to be reported, during and/or after the process of switching to the target base station, sending the location-related information to the target base station.

22. The method of any one of claims 1-18, wherein whether to obtain the location-related information and report the location-related information having the precision reduced in a case where available location-related information is not stored is determined based on at least one of:
an indication of the base station;
a trigger event that triggers reporting the location-related information;
a purpose of reporting the location-related information;
a state of the terminal; and
a precision of the location-related information to be reduced.

23. A method for receiving location-related information, performed by a base station, comprising:
receiving the location-related information having a precision reduced sent by a terminal.

24. The method of claim 23, wherein in response to the location-related information comprising location coordinate information, the location-related information having the precision reduced is obtained from an IE, and the IE comprises at least one of:
a location coordinate IE (locationCoordinate IE);
a Bluetooth log measurement result list IE (LogMeasResultListBT IE);
a wireless local network (WLAN) log measurement result list IE (LogMeasResultWLAN IE); or
a sensor location information IE (Sensor-LocationInfo IE).

25. The method of claim 23, further comprising:
determining, based on an indication of the terminal, a purpose of reporting the location-related information, wherein the purpose comprises at least one of:
Timing advance (TA) report, Minimization of Drive-Test (MDT), and Self Organization Network (SON).

26. The method of claim 23, further comprising:
sending a precision reduction requirement to the terminal.

27. The method of claim 23, further comprising:
receiving the location-related information having a precision not reduced sent by the terminal.

28. The method of any one of claims 23 -27, further comprising:
in response to the terminal needing to switch to a target base station, sending the location-related information to the target base station.

29. An apparatus for reporting location-related information, comprising one or more processors, wherein the one or more processors are configured to:
reduce a precision of the location-related information of the terminal; and
report the location-related information having the precision reduced to a base station.

30. An apparatus for receiving location-related information, comprising one or more processors, wherein the one or more processors are configured to:
receive the location-related information having a precision reduced sent by a terminal.

31. A communication apparatus, comprising:
a processor;
a memory for storing a computer program; wherein
when the computer program is executed by the processor, the method for reporting location-related information of any one of claims 1-22 is implemented.

32. A communication apparatus, comprising:
a processor;
a memory for storing a computer program; wherein
when the computer program is executed by the processor, the method for receiving location-related information of any one of claims 23-28 is implemented.

33. A computer-readable storage medium for storing a computer program, wherein when the computer program is executed by a processor, the steps in the method for reporting location-related information of any one of claims 1-22 are implemented.

34. A computer-readable storage medium for storing a computer program, wherein when the computer program is executed by a processor, the steps in the method for receiving location-related information of any one of claims 23 -28 are implemented.
